(19) Europäisches Patentamt / European Patent Office / Office européen des brevets

(11) **EP 2 773 445 B1**

(12) **EUROPEAN PATENT SPECIFICATION**

(45) Date of publication and mention
of the grant of the patent:
**20.01.2016 Bulletin 2016/03**

(21) Application number: **12788310.6**

(22) Date of filing: **02.11.2012**

(51) Int Cl.:
*B01D 69/10* (2006.01)     *B01D 71/02* (2006.01)
*B01D 69/14* (2006.01)     *B01D 53/22* (2006.01)
*C08G 77/50* (2006.01)     *C08L 83/14* (2006.01)
*C09D 183/14* (2006.01)

(86) International application number:
**PCT/NL2012/050773**

(87) International publication number:
**WO 2013/066184 (10.05.2013 Gazette 2013/19)**

(54) **SUPPORTED POLYSILSESQUIOXANE MEMBRANE AND PRODUCTION THEREOF**

GETRÄGERTE POLYSILSESQUIOXANMEMBRAN UND IHRE HERSTELLUNG

MEMBRANE DE POLYSILSESQUIOXANE SUPPORTÉE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2011 NL 2007705**

(43) Date of publication of application:
**10.09.2014 Bulletin 2014/37**

(73) Proprietor: **Stichting Energieonderzoek Centrum Nederland**
**1755 LE Petten (NL)**

(72) Inventors:
• **KREITER, Robert**
  **NL-1755 LE Petten (NL)**
• **CREATORE, Mariadriana**
  **NL-1755 LE Petten (NL)**
• **CUPERUS, Folkert Petrus**
  **NL-1755 LE Petten (NL)**
• **VENTE, Jaap Ferdinand**
  **NL-1755 LE Petten (NL)**
• **TCHOUA NGAMOU, Patrick Herve**
  **NL-1755 LE Petten (NL)**

(74) Representative: **Nederlandsch Octrooibureau**
**P.O. Box 29720**
**2502 LS The Hague (NL)**

(56) References cited:
**EP-A1- 2 264 219**          **EP-A2- 1 982 955**
**WO-A1-2007/081212**          **JP-A- 2009 233 540**

## Description

The invention relates to (micro)porous organic-inorganic hybrid membranes on organic polymer support materials suitable for the separation of molecules.

### Background

Recent investigations have shown that organic-inorganic hybrid silica membranes based on short bridged silane precursors of the form $\alpha,\omega$-bis(alkyloxysilyl)-alkane or $\alpha,\omega$-bis(alkyloxysilyl)arene, optionally mixed with short alkyltriethoxysilanes are suitable for the separation of water from several organic solvents, including *n*-butanol (Castricum et al., 2008 [1], Sah et al., WO 2007/081212). The long-term stability of these membranes was unprecedented. Membrane life-times up to at least two years were demonstrated at an operating temperature of 150°C. It is well-known that inorganic silica and methylated silica membranes do not survive at these temperatures (Campaniello et al. 2004 [2]). As further proof of the high stability of these membranes, the performance of organic-inorganic hybrid silica is not affected by traces of acid in alcohol/water mixtures (Castricum et al. J. Membr. Sci 2008, [3]; WO 2010/008283 Kreiter et al, 2009 [4]. In addition, it was found that combinations of $\alpha,\omega$-bis-(alkyloxysilyl)alkane or $\alpha,\omega$-bis(alkyloxysilyl)arene, and alkyltriethoxysilanes with an average carbon content of 3.5 lead to membranes with hydrophobic properties that can be used for example in organophilic pervaporation or solvent nanofiltration.

These state of the art membranes are prepared by depositing a sol based on modified silicon (hydr)oxide from said sol onto a multilayered ceramic mesoporous support. This mesoporous ceramic support is chosen to provide mechanical strength and stability over a broad temperature range and a low resistance against transport of gases or liquids. Because of the multilayered nature of such supports, their preparation costs can be significant, such that the membrane production costs are dominated by the costs of the support. Conventional ceramic membrane preparation is still heavily based on such multilayered flat or tubular supports.

The invention aims at producing alternative, more cost-efficient membranes suitable for separating small molecules.

### Summary of the invention

It was found that thin hybrid organic-inorganic silica films can be deposited on organic polymer supports, wherein a large proportion of organic bridging groups are retained in the final structure. Composite membranes having a selective hybrid silica layer containing organic bridges between silicon atoms supported by an organic polymeric structure have not been reported before. These membranes combine low cost with high separation efficiency and satisfactory thermal stability. The hybrid silica layer provides the separation properties as the organic polymer support system can be essentially non-selective, and at the same time it protects the polymer against swelling and deterioration under the harsh conditions occurring e.g. in high-temperature separation of small molecules, such as in pervaporation, and in nanofiltration.

### Detailed description of the invention

The invention pertains to a membrane as defined in claim 1. The films are deposited on an organic polymer support. The invention also pertains to a process for producing these membranes as defined claim 8. The films can advantageously be deposited using Chemical Vapour Deposition (CVD) techniques, or by wet chemistry.

The organic groups bound to two or more silicon atoms are also referred to herein as "bridging groups" or simply as "bridge". The organic groups of the silica film can be any group having at least one carbon atom, such as methylene, up to e.g. 16 carbon atoms. Preferably, the organic groups have 1-12 carbon atoms. The organic groups can be divalent, trivalent or tetravalent and thus be bound to two, three or four silicon atoms. Preferably the organic groups are hydrocarbon groups. For example they can be selected from alkanediyl, alkanetriyl, alkanetetrayl, the corresponding mono- and polyunsaturated and cyclic analogues (alkene, alkyne, alkadiene, cycloalkane), arenediyl, arenetriyl and arenetetrayl groups. Suitable examples of alkanediyl groups include methylene ($-CH_2-$), ethylene ($-CH_2-CH_2-$), ethylidene ($-CH(CH_3)-$), propylene (1,2- and 1,3-), butylene isomers, hexylene, octylene and homologues, vinylene ($-CH=CH-$), etc., as well as cyclohexylene, cyclohexanedimethylene, etc. Examples of alkanetriyl and alkanetetrayl include methine ($-CH<$), propane-1,2,3-triyl, 2,2-dimethylpropane-tetrayl, cyclohexane-triyl and -tetrayl and the like. Examples of arenediyl, arenetriyl and arenetetrayl groups include phenylene (1,2-, 1,3- and 1,4-, preferably 1,4-), benzene-triyl and benzene-tetrayl, naphthylene (various isomers), biphenylene, but also the corresponding aralkane derivatives such as toluylene and xylylenes organic groups having intermittent heteroatoms, such as oxydimethylene ($-CH_2-CH_2-$), as well as fluorinated organic groups such as tetrafluoroethylene, can also suitable be used. Preferred organic groups include methylene, ethylene, propylene, and phenylene. Most preferred is ethylene, resulting in Si-

$CH_2$-$CH_2$-Si bridges in the silica film, the remaining valencies of Si typically being bound to oxygen.

In the final silica film, the silica comprises at least 1 of the above bridging organic groups per 10 silicon atoms. When the organic group is a divalent group, such as methylene, ethylene or phenylene, the silica preferably comprises at least 1.5 organic groups per 10 silicon atoms, more preferably at least 2 per 10, most preferably at least 2.5 per 10 Si. When the organic group is trivalent or with higher valence, the silica preferably comprises at least 0.075 organic groups silicon atoms per 10 silicon atoms, preferably at least 1 per 10, more preferably at least 1.5 per 10 Si.

As an alternative criterion, the carbon content of the final silica film is at least 2 carbon atoms per 10 silicon atoms (2:10), preferably at least 3:10, most preferably at least 4:10.

In addition to bridging (divalent or higher) organic groups, the silica film of the invention may comprise organic monovalent (terminating) groups, which are each bound to one silicon atom. The resulting membranes have specific and advantageous separation performances and form a distinct embodiment of the invention. Thus a silica layer of the membrane of the invention may comprise bridging organic groups as described above, in a molar proportion of at least 10% of the silicon atoms, and optionally further silicon atoms may have a monovalent $C_1$-$C_{30}$ organic group as a substituent. It is then preferred that either the divalent organic group or the monovalent organic group has a minimum length of 6 carbon atoms, or both. The average number of carbon atoms of the monovalent organic groups and the divalent (an any higher-valent) organic groups taken together is preferably at least 3, more preferably at least 3.5. As an alternative criterion, the carbon content of the silica film of this embodiment is at least 6 carbon atoms per 10 silicon atoms, preferably at least 10 carbon atoms, and most preferably at least 15 carbon atoms per 10 silicon atoms.

Compositions as described above are further referred to as "organosilica" or "hybrid silica", "hybrid" meaning that the silicon atoms are both bound to oxygen (inorganic) and to carbon (organic). The precursors for the organosilica compositions as used in the process of the invention are generally referred to herein as silanes, alkoxylated silanes etc.

The thickness of the organosilica film may be from 50 nm to 1 μm, preferably from 75 to 750 nm, most preferably from 100 to 500 nm.

The support of the membranes of the invention is an organic polymer support as defined claim 1. An organic polymer is understood herein to be a polymer containing chains of at least 100 atoms (linear or branched) on average at least every second of which is a carbon atom or is directed substituted with carbon. At least part of the carbon atoms bears hydrogen atoms. Suitable polymers are polyacrylonitrile (PAN), polysulphones polyethersulphones (PES), polyether-etherketones (PEEK) and other poly-etherketones, polyimides (PI), including polyetherimide (PEI), polyethylene-terephthalate (PET), polyamides (PA), both aromatic and aliphatic such Nylon-6,6, polyamide-imides (PAI), and cellulose esters. Especially suitable are PAI, PI and PEEK. Also composite materials such as PAN-PA are suitable. The supports based on these materials are preferably porous. Optionally, the porous organic polymer support layer is supported by a woven or non-woven material fabric, such as Nylon or polyester, PET, PAN, or similar organic polymeric materials.

These polymer-supported hybrid silica membranes deposited on flat sheets can be used in conventional module types, for example plate and frame or spiral wound modules, which lowers the need for mechanical stability of the membrane itself. In an alternative configuration the hybrid silica layer is deposited on a polymeric support with a cylindrical geometry such as tubes, hollow fibres, with either one or multiple parallel channels in the structure. Again, conventional modules concepts can be applied. Further examples of suitable support materials and geometries, their preparation, and module concepts can be found in A.I. Schafer et al. (Eds) (Nanofiltration - Principles and Applications, 2006, Elsevier, Amsterdam).

The porous organic polymer support layer can be prepared by casting from a solution and phase inversion using a non-solvent. Pore sizes of the support can be tuned by the ratio of solvent/non-solvent and the residence time in the non-solvent. Alternatively, the support can be applied by interfacial polymerization using an aqueous and an organic monomer solution, which are brought into contact on a macroporous support interface. In addition, an optional post treatment using heat, vacuum, and/or UV irradiation can be used, optionally followed by a chemical treatment. The porous support layer for the hybrid silica film conveniently has a thickness of 200 nm to 500 μm, preferably from 1 to 200 μm. The thickness of the optional additional woven or non-woven material fabric is only of interest to provide sufficient strength.

The hybrid silica film can be produced by methods known in the art, such as wet sol-gel chemistry as described e.g. in WO 2007/081212, and as further described below. However, it is preferred to produce the silica film by directly using the precursor silanes in the vapour phase and depositing onto the organic polymer support using chemical vapour deposition (CVD). Particularly useful for applying the hybrid silica layer is plasma-enhanced chemical vapour deposition (PE-CVD). This result is surprising since retention of organic moieties using PE-CVD is not straightforward as PE-CVD is fundamentally a precursor dissociative technique rather than a polymerization technique one. It was found that retention of the organic bridging groups can be achieved by tuning the PE-CVD equipment and operation, *inter alia* by having a relatively long distance between the substrate and the plasma source, enabling a quasi-nul dissociation of the precursor by means of electron impact. Plasma deposition of silica or organosilica films can be performed in a single step or two step process. The molecular precursors, i.e. the silanes, are evaporated and (partially) fragmented in the plasma phase whilst being deposited onto a support material. Dissociation is initiated by argon ions present in the thermal plasma. By controlling the flux of argon ions and that of the precursor, the dissociation of the precursor can fully be controlled. Optionally, the resulting material is heat-treated to stabilise the film. Compared to sol-gel deposition techniques, this procedure skips the separate step of particle formation from molecular precursors. As an additional benefit, solvents are not used in this route. This vapour deposition is therefore commonly referred as "dry chemistry approach".

Organosilica films deposited by plasma enhanced chemical vapour deposition (PE-CVD) are known in the art. For example, Lo et al, 2010 (ref. [5]) describe hybrid silica films deposited on cellulose esters using PE-CVD of octamethylcyclotetrasiloxane (OMCTS). They show that the pore structure of the resulting membrane can be controlled by adjusting the plasma deposition parameters, in particular the RF power. Creatore et al. (ref.'s [6], [7], [8] and further references cited therein) report the tuneability of the degree of inorganic-organic character of organosilica films deposited from hexamethyldisiloxane (HMDSO) admixed in the downstream region with oxygen in an Ar-fed expanding thermal plasma (ETP). The expanding thermal plasma setup was found to be a key factor for an independent control of the (Ar+, e$^-$) flow rate, which is responsible for the dissociation of the monomer and the downstream chemistry. Therefore, adjusting the Ar-to-monomer flow rate enables controlling the plasma reactivity and thus the film properties, including their chemical composition.

The possibility of tuning the film composition by adjusting plasma parameters and thereby tailoring the film (chemical, optical, morphological, mechanical, etc.) properties makes the plasma-deposited films more attractive.

In addition to improved separation performances, tuning the degree of the organic/inorganic character of organosilica films enables improving their thermal and mechanical stability.

It was surprisingly found according to the invention that bridged silane precursors, such as $\alpha,\omega$-bis(alkoxysilyl)alkanes or $\alpha,\omega$-bis(alkyloxysilyl)arenes, despite their relatively low vapour pressure at room temperature when compared to that of other widely used precursors, such as hexamethyldisiloxane (HMDSO), tetraethoxysilane (TEOS) and octamethylcyclotetrasilosane (OMCTSO), can excellently be used as precursor in PECVD processes to produce hybrid silica layers having a high organic content. Thus, the molecular composition of this precursor is well suited for the deposition of alkylene, or otherwise organically bridged silica films, using the ability of the PECVD technique to deposit a thin film with a thickness ranging from 1 nm to 50 $\mu$m and a tuneable degree of cross-linking, morphology, pore size distribution, affinity by controlling plasma and process parameters and appropriate selection of the silane precursor.

The process of producing a membrane comprising a hybrid silica film on a polymer substrate layer comprises converting an alkoxylated or acylated silane precursor to an organosilica structure containing organic groups bound to two or more silicon atoms in the silica layer, preferably by plasma-enhanced CVD. In particular, the alkoxylated silane precursor has one of the formulae I, II or III:

$$(R'O)_3 Si\text{-}[R]\text{-}Si(OR')_3, \qquad (I)$$

$$((R'O)_3Si)_2=[R]\text{-}Si(OR')_3, \qquad (II)$$

$$((R'O)_3Si)_2=[R]=(Si(OR')_3)_2, \qquad (III)$$

or possibly

$$(R'O)_3Si\text{-}[R]\text{-}Si(OR')_2\text{-}[R]\text{-}Si(OR')_3 \qquad (IV)$$

or

$$(R'O)_2R°Si\text{-}[R]\text{-}SiR°(OR')_2, \qquad (V)$$

wherein R is an organic group preferably having 1-12 carbon atoms, R' = $C_1$-$C_6$ alkyl or alkanoyl, especially $C_1$-$C_4$ alkyl, such as methyl, ethyl or acetyl, and R° is hydrogen, methyl or ethyl, preferably methyl. In particular, the group R is a divalent, trivalent or tetravalent organic group, respectively, in formulae (I)/(IV)/(V), (II), and (III), as presented above. Preferably R is a hydrocarbon group, more preferably having 1-10 carbon atoms in case of precursors of formulae I, II or III, or 1-4 carbon atoms in case of precursors of formula IV.

In vapour deposition techniques, the precursor or precursor mixture according to one or more of the formulas I, II, III, IV and V, optionally in the presence of a monovalent precursor, is evaporated and then injected in the deposition chamber to carry out either CVD or PE-CVD processes. These processes can be performed either in a vacuum chamber (low pressure PE-CVD) or at atmospheric pressure (atmospheric pressure PE-CVD), i.e. without the use of any vacuum, or low pressure, equipment. For example, a roll-to-roll configuration can be adopted where a plasma is ignited at atmospheric pressure in a so-defined dielectric barrier discharge where the polymers mentioned above, i.e. PAI, PI, PEEK, serve as a dielectric, placed on the electrodes at an interelectrode distance of a few mm. The discharge is usually ignited in Ar, $N_2$ or dry air, where the precursor silane is injected for the deposition of the organosilica membrane. The discharge is ignited by means of a sine-wave generator at frequencies in the order of hundreds of kHz applied to the electrodes. As carrier gas preferably an inert gas, such as helium, argon, or nitrogen is used or a mixture of an inert gas and oxygen in ratios of 0-100% oxygen content, more preferably 0-50% and most preferably 0-21 % oxygen content. Information about atmospheric glow discharge plasma generation can be found e.g. in WO 2007/139379, WO 2005/062337 and WO 2004/030019.

In the case of the expanding thermal plasma, the Ar gas is injected into the cascaded arc, where a direct current plasma is developed at sub-atmospheric pressure: the Ar plasma consisting of argon ions and electrons, according to an ionization efficiency which can be controlled by means of the Ar flow rate and the dc current, expands in the downstream region. There the ions (and electrons) are responsible for the dissociation of the deposition precursors, which then deliver radicals towards the substrate where the layer grows. A simplified scheme is presented here below and an example specific for organosilicon-based molecules is given in Creatore et al. 2006 (ref. [7]) and references [8] and [9] cited therein:

$$Ar^+ + M \rightarrow M^+ + Ar$$

(charge exchange reaction)
or alternatively

$$Ar^+ + M \rightarrow R_1 + R_2^+ + Ar$$

(charge exchange reaction accompanied by ionization of the monomer M in $M^+$ or dissociative ionization of M in radicals or molecules, $R_1$, and ions, $R_2^+$) followed by dissociative recombination with low temperature electrons:

$$M^+ + e^- \rightarrow R_1 + R_2$$

or alternatively ,

$$R_2^+ + e^- \rightarrow R_2$$

The plasma and process parameters can be tuned depending on the desired properties of the resulting hybrid silica film. In particular, the plasma and process parameters can have one or more of the following values in expanded thermal plasma (ETP) CVD, i.e. each parameter can be set independently from the other:

o Plasma ($Ar^+$, $e^-$) flow rate: 15-120 standard cubic centimetre per minute (sccm), preferably 20-100 sccm, most preferably 25-50 sccm;
o Precursor (silane) to Ar volume flow rate ratio: 2.5-25, preferably 2.5-10, most preferably 3-5;
o Time-resolved pulsing of the precursor (silane) (time on/time off): 0.002-0.015, preferably 0.0025-0.01;
o Substrate temperature: 25-200 °C, preferably 50-150°C;
o Pressure: 0.1-1 mbar, preferably 0.15-0.25 mbar;
o Bias: 2-50 eV, preferably 5-15 eV.

In particular, by tuning the $Ar^+$ and electron flow rate (via the Ar flow rate and the arc current in the cascaded arc) with respect to the monomer silane flow rate, specific conditions can be selected to obtain the best results in terms of retention of the organic bridging group. These conditions correspond to low plasma reactivity, i.e. low ($Ar^+$, $e^-$) flow rate.

In the case of the atmospheric pressure PECVD, the process parameters can have one or more of the following values:

o Flow gas: 1000-50,000 sccm, preferably 2000-10,000 sccm
o Flow of precursor silane: 0.1-10 g/hr, preferably 0.5-5 g/hr
o Interelectrode gap: 0.1-5 mm, preferably 0.2-0.5 mm
o Frequency: 100-200 kHz, preferably 120-150 kHz
o Duty cycle: 5-50%, preferably 10-30%
o Pulse duration: 50-1000 s, preferably 100-500 s.

In order to further improve the strength and stability of the membranes of the invention, it may be advantageous to pre-treat the organic polymer support with a reactive silicon compound having the formula $(R'O)_{3-x}R_xSi-R''$, wherein $R = C_1-C_4$ alkyl, preferably methyl, $R' = C_1-C_6$ alkyl, especially $C_1-C_4$ alkyl, preferably methyl or ethyl, $R''$ is a reactive group selected from amino, hydroxyl, and vinyl, optionally bound via an alkylene and/or ester group, and $x = 0$ or 1. This layer can optionally be deposited using plasma deposition processes or wet chemical deposition methods known in the field, such as spraying, dip-coating, rolling, and similar methods. This results in an intermediate layer which serves to improve adhesion of the hybrid silica layer to the organic polymer support. Examples of reactive groups R'' follow from the following silanes that can be used for the pre-treatment: 3-aminopropyltriethoxysilane, 3-amino-propyl(dimethoxy)methylsilane, vinyltriethoxysilane, methacryloxypropyl-trimethoxysilane, 3-glycidyloxypropyltrimethoxysilane, 3,3-glycidyloxypropylmethyldimethoxy-silane.

Alternatively, an optional surface treatment of the organic polymer support is applied, employing either of the following steps or a combination thereof: a washing step with concentrated inorganic acids, a plasma treatment optionally in the presence of an active gas, such as oxygen, an ozone treatment, or electromagnetic irradiation, in particular infrared irradiation.

As an alternative, though slightly less preferred process, the membranes of the invention can be produced by sol-gel processes as described e.g. in WO 2007/081212. In brief, such a process comprises:

(a) hydrolysing an alkoxylated or acylated silane having one of the formulas [I], [II], [III], [IV] or [V] above or a mixture thereof, optionally in combination with a silicon alkoxide of the formula $(R'O)_3Si-R^a$ wherein $R^a$ is a monovalent $C_1$-$C_{30}$ group, or with minor amounts of tetra-alkoxysilanes of the formula $(R'O)_4Si$ or of formula [IV] or minor amounts of other alkoxymetals (e.g. titanium, zirconium), 'minor' meaning less than 10 mol% on total alkoxylated precursor; in an organic solvent to produce a sol of modified silicon or mixed-metal (hydr)oxide;
(b) precipitating modified silicon or mixed-metal (hydr)oxide from said sol onto an organic polymer support;
(c) drying the precipitate and calcining at a temperature between 25 and 400°C, preferably between 50 and 300°C, most preferably between 100 and 200°C.

In case of a mixture, the molar ratio of the monovalent and divalent or multivalent alkoxylated silanes is typically the same as the ratio of the various groups in the membrane as produced, preferably between 1:9 and 3:1, or alternatively, between 1:4 and 9:1, more preferably between 1:1 and 3:1.

In the case of the sol-gel process, hydrolysis is carried out in an organic solvent such as ethers, alcohols, ketones, amides etc. Alcohols corresponding to the alkoxide groups of the precursors, such as methanol, ethanol, and propanol, are the preferred solvents. The organic solvent can be used in a weight ratio between organic solvent and silane precursor of between 10:1 and 1:1, more preferably between 3:1 and 2:1. The hydrolysis is carried out in the presence of water and, if necessary, a catalyst. The preferred molar ratio of water to silicon is between 1 and 8, more preferred between 2 and 6. A catalyst may be necessary if hydrolysis in neutral water is too slow. An acid is preferably used as a catalyst, since an acid was found to assist in producing the desired morphology of the membrane. The amount of acid is preferably between 0.001 and 0.1 moles per mole of water, more preferably between 0.005 and 0.5 mole/mole. The reaction temperature can be between 0°C and the boiling temperature of the organic solvent. It is preferred to use elevated temperatures, in particular above room temperature, especially above 40°C up to about 5°C below the boiling point of the solvent, e.g. up to 75°C in the case of ethanol. It was found to be important that the hydrolysis is carried out in the absence of surfactants such as long-chain alkyl ammonium salts (cationic) or blocked polyalkylene oxides or long-chain alkyl polyalkylene oxides (non-ionic) or long-chain alkane-sulphonates (anionic) and the like. Such surfactants should therefore preferably not present above a level of 0.1% (w/w) of the reaction mixture, more preferably below 100 ppm or best be completely absent.

Deposition or precipitation of the hydrolysed silane on the organic polymer support, which is optionally pre-treated, can be performed e.g. by liquid coating methods such as knife or doctor blade coating, dip-coating, screen printing, slot dye coating, curtain coating, and inkjet printing, optionally in the presence of a roller system. Preferable methods include dip-coating, doctor blade coating, screen printing, and inkjet printing.

The optional drying, calcining and/or stabilisation of the deposit, made by either technique, is preferably carried out under an inert, i.e. non-oxidising atmosphere, for example under argon or nitrogen as described in WO 2007/081212. The temperature for consolidation or calcination is at least 25°C, up to 400°C, or up to 350°C, using a commonly applied heating and cooling program. The preferred range for the drying and calcination temperature is between 50 and 300°C, more preferably between 100 and 250 °C, most preferably up to 200°C. It was found that thermal stability is limited by the stability of the organic polymer support material, rather than the inorganic-organic hybrid silica. The porosity of the membranes can be tuned by selecting the appropriate hydrolysis conditions, and the appropriate consolidation parameters (drying rate, temperature and rate of calcination). Higher temperatures typically result in smaller pore sizes.

The wet process embodiment, using sol-gel chemistry, is particularly useful for producing membranes for nanofiltration and related uses as described herein, wherein the silica contains bridging and/or terminal groups having an average of ate least 3, preferably at least 3.5 carbon atoms. Thus, either the bridging (divalent, or optionally trivalent or tetravalent) groups have at least 6 carbon atoms, preferably at least 8 carbon atoms, up to e.g. 12 carbon atoms, or the (monovalent) terminal groups have at least 6 carbon atoms, or both have at least 6 carbon atoms. The monovalent groups may generally be a $C_1$-$C_{30}$ organic group, in particular a hydrocarbon groups, wherein one or more hydrogen atoms may be replaced by fluorine. Preferred groups are $C_1$-$C_{24}$, especially $C_1$-$C_{18}$ organic groups, or, when used alone

$C_6$-$C_{18}$ organic, preferably $C_6$-$C_{12}$ organic, preferably (fluoro)hydrocarbyl groups. Examples include methyl, ethyl, trifluoroethyl, propyl, butenyl, hexyl, fluorophenyl, benzyl, octyl, decyl, dodecyl, hexadecyl and their stereoisomers such as iso-octyl.

It is preferred that a membrane of the invention, especially when produced by wet (sol-gel) chemistry, has a high content of organic groups (bridging and/or terminal), i.e. at least 2.5 organic group per 10 silicon atoms. In particular the membranes produced by wet chemistry contain at least 3 bridging groups, most preferably at least 4 bridging groups (up to e.g. 5) per 10 silicon atoms, or at least 2 bridging groups and at least 2 terminal groups, most preferably at least 2.5 bridging groups and at least 3 terminal groups per 10 silicon atoms.

Although the wet sol-gel process is suitable, especially when high hydrothermal stability is required, or for the purpose of nanofiltration using relatively long bridges or tails, the more preferred production process comprises CVD, especially PE-CVD, as referred to above. The ability of the PE-CVD technique to deposit a thin and highly cross-linked film in the presence of an organic bridging group, such as ethylene (-Si-$CH_2$-$CH_2$-Si-) in the silica network directly from the precursor removes a processing step as compared to the sol-gel process counterparts. For sol-gel processing, the precursor needs to be reacted to small nano-clusters of hybrid silica before coating can take place. In contrast, reaction and deposition take place in one step in the plasma process. An advantage of the plasma process is the tuneability of the degree of inorganic and organic character of organosilica films deposited from (HMDSO)/$O_2$/Ar mixtures by means of the expanding thermal plasma CVD. The remote character of the expanding thermal plasma setup allows an independent control of the (Ar+, e-) flow and hence the dissociation of the monomer and the gas chemistry in the downstream region. Therefore, adjusting the ratio of flows of monomer-to-Ar ions enables controlling the plasma reactivity and thus the film composition. It is preferred to induce low fragmentation of the organosilane precursors in the thermal plasma by using 'mild' plasma conditions i.e. an (Ar+, e-) flow of 30 sccm in order to preserve the organic bridging group given by the molecular structure of the organo-silane precursor.

The membranes or molecular separation membrane layers of the invention represent an amorphous material with a disordered array of micropores with a pore size below 2 nm, especially below 1.5 nm and particularly centred between 0.3 and 1.2 nm. For nanofiltration preferred pore diameters are between 0.4 and 2 nm, especially between 0.5 and 1.3 nm, while for separating small molecules the preferred pore diameters and between 0.2 and 1.0 nm, especially between 0.3 and 0.7 nm. One way of assessing the disordered nature of these structures is to use one of several diffraction techniques using e.g. electrons, x-rays and neutrons.

The membranes have a narrow pore size distribution; in particular, the pores size distribution, determined as described below, is such that pores sizes of more than 125% of the mean pore size are not present for more than 20%, or even not for more than 10%, of the average pore size. The Kelvin pore size and Kelvin pore size distribution can be determined by permporometry, i.e. the gas permeance from a gas-vapour (adsorbing or condensing) gas is measured as a function of the relative pressure of the vapour. In this way progressive pore blocking by the adsorbing vapour is followed. This can be related to a pore size by recalculating the relative vapour pressure to a length scale by using the Kelvin equation:

$$d_k = -4\gamma v_m / RT \ln(\frac{p}{p_0}),$$

where $d_k$ is the pore diameter, y the surface tension, $V_m$ the molar volume, R the gas constant, T the temperature, p the (partial) vapour pressure and $p_0$ the saturated vapour pressure. Water or hexane was used as an adsorbing/condensing vapour and He as the non-adsorbing gas.

The porosity of the membranes is typically below 45%, e.g. between 10 and 40%, which is also indicative of a disordered array, since ordered arrays (crystals) usually have porosities above 50%.

The membranes of the invention can be used for various separation purposes, such as the separation of:

    a. small molecules from each other, such as hydrogen, nitrogen, ammonia, lower alkanes and water, in particular hydrogen from other gases;
    b. water from small organic molecules such as alkanols, ethers and ketones, in particular alcohols;
    c. small organic molecules such as alcohols from water with a phase change from liquid to vapour over the membrane known as 'pervaporation';
    d. water from solutes, such as salts or organic residues; or
    e. water or organic solvents from larger molecules through a (nano)-filtration process.

Membranes of the invention containing small divalent groups, in particular methylene, ethylene and ethylidene, have a narrow pore size distribution. Pore sizes of more than 125% of the average pore size are responsible for less than 20%, or even for less than 10% of the total permeance. In a particular embodiment, the permeance through these membranes through pores larger than 1.0 nm is less than 10% of the total permeance, more in particular the permeance through pores having a pore size of more than 0.8 nm is less than 10% of the total permeance. These membranes according to the invention can be used to separate relatively small molecules such as $NH_3$, $H_2O$ He, $H_2$, $CO_2$, CO, $CH_3OH$, from larger molecules in the liquid or the gas phase. However, the membranes of this embodiment, i.e. having small divalent groups, are remarkably suitable for separating very small molecules such as $H_2$ and He from molecules having at least one atom from the second or higher row of the periodic system. For example, the membranes can be used for separating hydrogen from one or more of the components $CH_4$, $CO_2$, CO, $N_2$, $CH_3OH$, $NH_3$, $CH_3F$, $CH_2F_2$, $C_2H_4$, $C_2H_6$ and related compounds or other trace components and their respective multi-component mixtures. On the other hand, the membranes of the invention are very suitable for separating small molecules such as $H_2O$ from molecules having at least two atoms from the second (Li to F) or higher (Na to Cl etc.) row of the periodic table. More specifically, these membranes can be used for removal of water from methanol, ethanol, *n*-propanol and isopropanol, propanediol and butanediol. It was found that the separation of water from these lower alcohols is highly effective, even in the presence of inorganic or organic acids.

Membranes of the invention containing long bivalent (or trivalent or tetravalent) organic groups such as $C_6$ (hexylene) and longer, or having, in addition to divalent (trivalent, tetravalent) groups, relatively long monovalent groups such as $C_6$ (hexyl) or longer, have more varying pore sizes, which cannot directly be determined using permporometry using water as condensable gas and helium as permeating gas. For these membranes no decrease of the helium permeance was observed upon increase of the partial water vapour pressure. This indicates that water does not condense in the pores of these membranes and thus the pores are not blocked by water vapour. In addition, nitrogen adsorption measurements according to the method of BET (Brunauer, Emmett, and Teller) show low or even absent surface areas. From this, it is concluded that no mesopores are present in the membranes of this embodiment. The porosity of these membranes having long organic groups is typically below 45%, e.g. between 10 and 40%, which is also indicative of a disordered array, since ordered arrays (e.g. zeolite crystals) usually have porosities above 50%. The microporous layer of the membrane has an average pore diameter between 0.4 and 2.0 nm, preferably between 0.5 and 1.3 nm.

The membranes having long organic groups can be used in nanofiltration, for separating relatively large organic molecules, such a dyes, catalysts, solid impurities and macromolecules, having more than 12 carbon atoms or having a molar weight above 200 Da, from organic solvents having 1-12 carbon atoms or having a molar weight below 180 Da, such as alkanes, benzene, toluene, xylenes, dichloromethane, alkyl and aryl alcohols, tetrahydrofuran, *N*-methylpyrrolidone, dimethylformamide, and similar solvents or mixtures of these. The components having a molecular weight above 200 Da can also be separated from solvents under supercritical conditions such as $CO_2$, acetone, methane, ethane, methanol, ethanol and the like. In all of these cases, the continuous medium (the solvent not being water) passes the membrane, whereas the component with molecular weight above 200 Da is retained by the membrane.

The membranes having long organic groups can also be used in organophilic pervaporation the separation of organic molecules, such as alkanes, benzene, toluene, xylenes, dichloromethane, alkyl and aryl alcohols, tetrahydrofuran, *N*-methylpyrrolidone, dimethylformamide, and similar compounds from aqueous mixtures. In such a separation, the hydrophobic, organic component passes through the membrane, contrary to the separation using membranes having short organic groups, i.e. shorter than C6, in particular having an average of 3 carbon atoms or less, in which water preferentially passes the membrane. The effective separation mechanism of such membranes having short groups thus is molecular sieving. In contrast, in the membranes based on long groups, the largest (organic) component in the mixture is permeating preferentially, up to a molar weight of up to about 200 Da. The separation mechanism of these membranes in organophilic pervaporation is thus based on affinity for the organic medium rather than size.

In the separation of water as minor component from organics as major component in the feed mixture, the separation factor, $\alpha_w$, is defined as:

$$\alpha_w = \frac{Y_w/Y_o}{X_w/X_o} \tag{1}$$

wherein Y and X are the weight fractions of water (w) and organic compounds (o) in the permeate (Y) and feed (X) solutions, respectively.

In the separation of organic components as minor component from water as major component in the feed mixture, the separation factor, $\alpha_o$, is defined as:

$$\alpha_o = \frac{Y_o/Y_w}{X_o/X_w} \tag{2}$$

wherein Y and X are the weight fractions of water (w) and organics (o) in the permeate (Y) and feed (X) solutions, respectively.

When the membrane based on long organic groups is used for separating alcohols from alcohol/water mixtures, i.e. for upgrading alcohol streams, e.g. to fuel grade, the input stream can have alcohol concentrations between e.g. 1 and 40%, and the output stream can have alcohol concentrations which are higher than the input stream and are between e.g. 20 and 80 %.

The structural and chemical analysis of the films was investigated using Fourier transform infrared (FTIR), and Rutherford back scattering (RBS) techniques. The optical properties of the organosilica films were also analyzed and parameters such as refractive index and absorption coefficient were correlated with their composition and structure. On the basis of the deposition rate, chemical composition, chemical bonding state and optical properties, the influence of the monomer flow rate in the Ar/BTESE plasma was investigated.

### Examples

***Example 1:*** *Preparation of polymer-supported hybrid silica membrane using PEPCVD*

A hybrid silica film containing ethylene groups was deposited on a macroporous polyamide-imide (PAI) substrate, based on commercial membranes 010206 and 010706 manufactured by SolSep BV (Apeldoorn, NL). The thickness of the membrane substrates, including sublayer and supporting non-woven, was approximately 100-200 micrometer. Expanding thermal plasma (ETP) processing was used. The ETP was carried out essentially as described by Creatore *et al.,* ref [6] and references cited therein. In brief, the argon (flow rate 20 sccs) plasma was ignited at an arc current of 25 A in a dc current cascaded arc operating at a pressure of 290 mbar. The thermal plasma expands through the nozzle into the deposition chamber kept at a pressure of 0.1 mbar.

The BTESE precursor (Sigma-Aldrich, 98%) was vaporized and carried by inert argon from a Bronckhorst-controlled evaporation module (CEM W202), maintained at 150°C, to the reactor. To prevent re-condensation of BTESE, all of the gas delivery lines were heated and kept at a constant temperature of 160°C. The BTESE vapour flow rate (2.3 - 42.6 sccm) was injected by means of a punctuated ring situated at 5 cm from the nozzle. The substrate was placed at 60 cm of the nozzle and heated at temperatures ranging from 50°C to 300°C by means of ohmic heating. The films deposited the PAI substrate had a thickness of 120-150 nm. A BTESE flow of 46.2 sccm was used and a heat treatment temperature of 230 °C. This resulted in membrane A.

The characteristics of the hybrid silica layers were determined using various analytical methods. Infrared spectroscopy was performed using a Bruker vector 22 Fourier transform infrared (FTIR) spectrometer operating in transmission mode. The resolution of the spectrometer was set at 4 $cm^{-1}$ and all spectra were collected in the range of 400-4000 $cm^{-1}$ normalized to the film thickness and baseline corrected for purposes of comparison. The deconvolution of FTIR peaks was done using the *fit multiple peak function* of the ORIGIN 8.5 software.

Optical analysis of the deposited films was performed *in situ* and *ex situ* by means of a spectroscopic UV-visible ellipsometer (J. A. Woollam M-2000U). Further chemical characterization was achieved by means of Rutherford back scattering (RBS) using a mono-energetic beam of two $MeV^4H^+$ ions sampled at normal incidence. The water repellency was measured by means of a water contact angle meter (KSV Cam 200) and the contact angle data are the average value of 4 measurements of different regions of the film.

*Results*

*Deposition rate and refractive index*

The deposition rate of the hybrid silica films was measured as a function of the BTESE flow rate ($\Phi_{BTESE}$) at a fixed Ar flow (20 standard cubic centimeters per second (sccs)). The deposition rate linearly increases with the increase of $\Phi_{BTESE}$ until a flow rate of approximately 35 sccm, above which a plateau of about 3 nm/s is reached.

The refractive index (*n*) measured in situ and ex situ (within 30 min of exposure to ambient air), as a function of the BTESE flow rate, decreases with the increase of $\Phi_{BTESE}$ up to a flow of approximately 25 sccm, from about 1.62 down to about 1.47 when it reaches a constant level apparently independent of the $\Phi_{BTESE}$. The decrease of *n* for lower $\Phi_{BTESE}$ values can be correlated with the decrease in carbon content as confirmed by the behaviour of the absorption coefficient, which is about 0.06 at the start and about 0.003 at $\Phi_{BTESE}$ of 25 sccm and higher.

*Film composition*

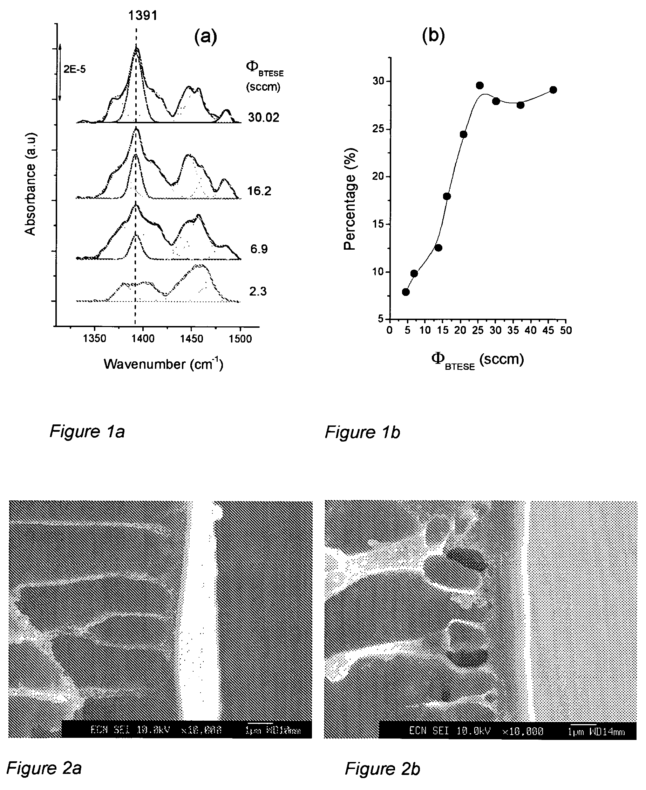

Fig. 1a shows the enlarged FTIR spectra of some selected films in the region between 1350 and 1500 $cm^{-1}$. The fitting of the absorption band in this region reveals the presence of peaks associated with $CH_2$ deformation in Si-

$CH_2$-$CH_2$-Si in the range 1360-1410 cm$^{-1}$ and $CH_3$ deformation vibrations in the ethoxy groups in the region between 1440 cm$^{-1}$ and 1480 cm$^{-1}$. The evolution of the relative intensity of the peak corresponding to $CH_2$ deformation in Si-$CH_2$-$CH_2$-Si as a function of the $\Phi_{BTESE}$ of Fig.1b shows that almost 30% of the Si-$CH_2$-$CH_2$-Si group is preserved from the original monomer. This identification is confirmed by the increase of the $CH_2$ wagging vibration in Si-$CH_2$-$CH_2$-Si as the $\Phi_{BTESE}$ increases.

The bulk atomic percentage of Si, C and O atoms, the density as well as the refractive index of films deposited at different $\Phi_{BTESE}$ value are reported in Table 1. From RBS measurements, it can be seen that the C-to-Si ratio decreases from 4 to 1.2 as the $\Phi_{BTESE}$ increases from 2.3 to 46.2 sccm. On the contrary, the film density is found to decrease from 1.52 to 0.88 g/cm$^3$. The difference in term of density between both films indicates the highest porosity of the films deposited at higher $\Phi_{BTESE}$ values. Therefore the decrease of the refractive index can be associated both to the increase of the film porosity and the decrease of the carbon content. The film surface roughness of the deposited films measured by Atomic Force Microscopy (AFM) and hence the film morphology was found not to be affected by the increase of the $\Phi_{BTESE}$, while the water repellency of the deposited films is increased as shown by a in increased contact angle from about 47° to about 71°. Therefore, the enhancement of the hydrophobic character of the obtained films cannot be ascribed to the surface roughness but to the presence of ethylene bridge (Si-$CH_2$-$CH_2$-Si) in the silica network.

*Table 1. Elemental composition, density, water contact angle and refractive index of films deposited with $\Phi_{BTESE}$ values of 2.3 sccm and 46.2 sccm (Example 1) and with sol-gel (Example 2).*

| Samples $\Phi_{BTESE}$ | RBS | | Density (g/cm$^3$) | $\Theta_w$ (°) | n @632.8 nm |
|---|---|---|---|---|---|
| | C/Si | O/Si | | | |
| 2.3 sccm | 3.99 | 1.82 | 1.52 | 91 | 1.61 |
| 13.2 sccm | 1.57 | 1.97 | 1.31 | 82 | 1.50 |
| 25.9 sccm | 1.3 | 2.0 | 1.17 | 78 | |
| 46.2 sccm | 1.18 | 2.09 | 0.88 | 71 | 1.47 |
| sol-gel | 1.17 | 1.95 | 2.11 | | 1.48 |

**Example 2:** *Polymer-supported hybrid silica membrane on PAI support*

A hybrid silica film containing ethylene groups was deposited on a macroporous polyamide-imide (PAI) substrates based on commercial membranes 010206 and 010706 and manufactured by Solsep BV. The BTESE precursor (ABCR, 98%) was converted into an ethanol-based sol, via the procedure disclosed in Kreiter et al. (ChemSusChem 2009, 2, 158-160). Hybrid silica sols with varying concentration were deposited on these substrates via a sol-gel process. The PAI substrates were typically made by phase inversion and were further modified by using higher and lower polymer dope concentrations. Thickness of the membranes, including sublayer and carrying non-woven was approximately 100-200 μm. It was found that glassy hybrid silica films could be deposited on the sublayers. These films appeared to be mechanically stable and were very flexible. After ambient drying for 2 h, the membrane was heat treated under $N_2$ for 2 h at 150 °C, applying heating and cooling ramps of 0.5 °/min. This resulted in membrane B. Circular samples were cut from the membrane sheet for further analysis. The bulk atomic percentage of Si, C and O atoms, the density as well as the refractive index of films are reported in Table 1. The FTIR data show the strong presence of $CH_2CH_2$ groups.

**Example 3:** *Characterization and performance of membranes*

Scanning electron microscope images of membranes A and B revealed smooth thin films of hybrid silica on top of the porous polymer support layer (Fig 2). Layer thicknesses observed were 200 nm for A and 450 nm for B. SEM analysis of the surface showed that the membranes are essentially defect-free.

Fig 2. shows SEM images of membrane A (a) (Example 1) having a thickness of 200 nm, and membrane B (b) (Example 2) having a thickness of 450 nm.

The membranes were used in pervaporation of ROH/$H_2O$ (95/5 wt%) mixtures with ROH = ethanol and *n*-butanol. Data for the flux and selectivity of membrane B (Example 2) are given in Table 2. The data show that the membranes are selective for water over the alcohols. Data for membranes produced according to Example 1 with varying BTESE flows, densities and thicknesses are given in Table 3. The data show excellent separation characteristics.

*Table 2. Pervaporation performance of hybrid silica membranes B in ROH/$H_2O$ (95/5 wt%) mixtures.*

| Membrane | ROH | T(°C) | Water flux (kg/m$^2$.h) | Separation factor $\alpha_w$ |
|---|---|---|---|---|
| B | EtOH | 50 | 1.1 | 11 |

(continued)

| Membrane | ROH | T(°C) | Water flux (kg/m2.h) | Separation factor $\alpha_w$ |
|---|---|---|---|---|
| B | EtOH | 70 | 1.3 | 14 |
| B | n-BuOH | 95 | 1.57 | 15 |

*Table 3. Water flux, water concentration in the permeate and separation factor after 4 days of continuous membrane operation in 95/5wt% n-butanol/water pervaporation (95°C) of hybrid silica membranes coated by PE-CVD. PAI refers to the uncoated polyamide-imide support.*

| ΦBTESE (sccm) | Density (g/cm$^3$) | Thickness (nm) | Water flux (kg/m$^2$h) | % of water in the permeate | Separation factor |
|---|---|---|---|---|---|
| PAI | | | 4.0 | 17.6 | 4.1 |
| 13.8 | 1.31 | 200 | 1.15 | 98.3 | 1090 |
| 25.9 | 1.17 | 325 | 1.77 | 98.4 | 1130 |
| 46.2 | 0.88 | 400 | 2.24 | 95.3 | 380 |

***Example 4:** Polymer-supported hybrid silica membrane on PAI and PDMS (not according to invention) support*

A hybrid silica film containing BTESE and n-decyl-triethoxy-silane (nDTES) was deposited on a macroporous polyamide-imide (PAI) substrate based on commercial membrane 010706 and on a macroporous polydimethylsiloxane (PDMS) substrate on commercial membrane 030705, both manufactured by SolSep BV. The mixed BTESE (ABCR, 98%) and nDTES (ABCR, 97%) precursors were converted into an ethanol-based sol, via the procedure described by Paradis (in the thesis "Novel concepts for microporous hybrid silica membranes: functionalisation and pore size tuning", Chapter 4, DOI: 10.3990./1.9789036533669, 2012). In short, a mixed sol was prepared by dissolving BTESE and nDTES (molar ratio 1:1) in ethanol (EtOH) and adding aqueous nitric acid in two portions, followed each time by 1.5 h stirring at 60°C, resulting in an Si/EtOH/H$^+$/H$_2$O ratio of 1/6.36/0.08/3. Hybrid silica sols with a concentration of 0.3 M were deposited on these substrates via a sol-gel process. Thickness of the membranes was about 1.5 $\mu$m. Including sublayer and supporting non-woven, the thickness was approximately 100-200 $\mu$m. It was found that glassy hybrid silica films could be deposited on the sublayers. These films appeared to be mechanically stable and were very flexible. After ambient drying for 2 h, the membrane was heat treated under N$_2$ for 2 h at 150 °C, applying heating and cooling ramps of 0.5 °/min. Circular samples were cut from the membrane sheet for further analysis. Fig 2. shows the SEM image of the membrane deposited on PAI.

For both supports a 100% retention was found for sunflower oil in toluene as solvent at ambient temperature. On the PAI support the permeance was 0.06 1/m$^2$hbar and on the PDMS support this was 0.13 l/m$^2$hbar.

**References**

[1] Castricum et al., Chem. Commun. 2008, 1103-1105; J. Mater. Chem. 2008, 18, 1-10.

[2] Campaniello et al., Chem. Commun. (2004) 834-835.

[3] Castricum et al., J. Membrane Science 324 (2008) 111-118.

[4] Kreiter et al., ChemSusChem. 2 (2009), 158-160.

[5] Lo et al. J. Membrane Science 365 (2010) 418-425.

[6] Creatore et al., Thin Solid Films 516 (2008) 8547-8553.

[7] Creatore et al., Plasma Sources Sci. Technol. 15 (2006) 421431.

[8] Creatore et al., Thin Solid Films 449 (2004) 52-62.

[9] Barrell et al., Surface Coatings Technol. 180-181 (2004) 367-371.

**Claims**

1.    A membrane comprising an organic-inorganic hybrid silica film on an organic polymer support selected from polyacrylonitrile, polysulphones, polyethersulphones, poly-etherketones, polyimides, polyetherimide, polyethylene-terephthalate, polyamides, polyamide-imides and cellulose esters, wherein the silica comprises organic bridging groups bound to two or more silicon atoms, wherein the silica comprises at least 1 of said organic bridging groups per 10 silicon atoms.

2. A membrane according to claim 1, wherein the silica comprises at least 1.5 of said organic bridging groups per 10 silicon atoms.

3. A membrane according to claim 1 or 2, wherein said organic bridging groups are selected from divalent, trivalent and tetravalent hydrocarbon groups having 1-12 carbon atoms, and preferably comprise an ethylene group or methylene group.

4. A membrane according to any one of claims 1-3, wherein the silica furthermore comprises organic monovalent, terminating, groups bound to one silicon atom.

5. A membrane according to any one of claims 1-4, wherein the organic polymer support is selected from polyamide-imides, polyimides, and polyether-etherketones.

6. A membrane according to any one claims 1-5, wherein the silica film has a thickness of from 20 nm to 1 $\mu$m, in particular between 50 and 500 nm.

7. A membrane according to any one of claims 1-6, wherein the hybrid silica film is porous with an average pore diameter between 0.2 and 2 nm, in particular between 0.3 and 1.2 nm.

8. A process of producing a membrane comprising an organic-inorganic hybrid silica film on an organic polymer support selected from polyacrylonitrile, polysulphones, polyethersulphones, poly-etherketones, polyimides, polyetherimide, polyethylene-terephthalate, polyamides, polyamide-imides and cellulose esters, comprising applying an alkoxylated or acylated silane, in which organic bridging groups are bound to two or more silicon atoms, onto the organic polymer support, followed by heating the organic polymer support at a temperature between 50 and 300°C in a non-oxidising atmosphere.

9. A process according to claim 8, wherein said alkoxylated or acylated silane has formula I, II, III, IV or V:

$$(R'O)_3Si\text{-}[R]\text{-}Si(OR')_3, \qquad (I)$$

$$((R'O)_3Si)_2\text{=}[R]\text{-}Si(OR')_3, \qquad (II)$$

$$((R'O)_3Si)_2\text{=}[R]\text{=}(Si(OR')_3)_2, \qquad (III)$$

$$(R'O)_3Si\text{-}[R]\text{-}Si(OR')_2\text{-}[R]\text{-}Si(OR')_3 \qquad (IV)$$

$$(R'O)_2R°Si\text{-}[R]\text{-}SiR°(OR')_2, \qquad (V)$$

wherein R is an organic group having 1-12 carbon atoms, R' = $C_1$-$C_6$ alkyl or alkanoyl, especially $C_1$-$C_4$ alkyl, and R° = $C_1$-$C_2$ alkyl or hydrogen.

10. A process according to claim 8 or 9, wherein the alkoxylated or acylated silane is applied to the organic polymer support by chemical vapour deposition (CVD), preferably comprising plasma-enhanced CVD.

11. A process according claim 10, wherein one or more, preferably all of the following parameters are applied:

   o $Ar^+,e^-$ flow rate: 15-120 standard cubic centimetre per minute (sccm), preferably 25-50 sccm;
   o silane precursor to Ar flow rate ratio: 2.5-25 in volume, preferably 3-5;
   o time-resolved pulsing of the silane precursor, expressed in time on/time off: 0.002-0.015, preferably 0.0025-0.01;
   o substrate temperature: 25-200 °C, preferably 50-150°C;
   o pressure: 0.1-1 mbar, preferably 0.15-0.25 mbar;
   o bias: 2-50 eV, preferably 5-15 eV.

12. A process according to claim 8 or 9, wherein the alkoxylated silane is applied onto the organic polymer support by hydrolysing said alkoxylated silane in a solvent and depositing the hydrolysed silane on the organic polymer support, preferably by screen printing, inkjet printing, or dip coating.

13. A process according to any one of claims 8-12, wherein the organic polymer support is pre-treated by one or more of inorganic acid treatment, plasma treatment, infrared irradiation and reactive silicon compound treatment, wherein the reactive silicon compound has the formula $(R'O)_{3-x}R_xSi-R''$, wherein R = $C_1$-$C_4$ alkyl, R' = $C_1$-$C_6$ alkyl, especially $C_1$-$C_4$ alkyl, R'' is a reactive group selected from amino, hydroxyl, and vinyl, optionally bound via an alkylene and/or ester group, and x = 0 or 1.

14. A process according to any one of claims 8-13, wherein said heating of the organic polymer support is performed at a temperature between 100 and 200°C.

15. Use of a membrane according to any one of claims 1-7 or produced by the process according to any one of claims 8-14 in separation processes, in particular in the separation of:

    a. small molecules from each other, in particular hydrogen from other gases;
    b. water from small organic molecules such as alcohols;
    c. small organic molecules such as alcohols from water with a phase change from liquid to vapour over the membrane;
    d. water from solutes, such as salts or organic residues; or
    e. water or organic solvents from larger molecules or particles through a nanofiltration process.

**Patentansprüche**

1. Membran, die einen hybriden organisch-anorganischen Siliziumdioxidfilm auf einem organischen Polymerträger aufweist, der ausgewählt ist aus Polyacrylnitril, Polysulfonen, Polyethersulfonen, Polyetherketonen, Polyimiden, Polyetherimiden, Polyethylenterephthalat, Polyamiden, Polyamidimiden und Celluloseestern, wobei das Siliziumdioxid organische verbrückende Gruppen aufweist, die an zwei oder mehr Siliziumatome gebunden sind, wobei das Siliziumdioxid wenigstens 1 der organischen verbrückenden Gruppen pro 10 Siliziumatomen aufweist.

2. Membran nach Anspruch 1, wobei das Siliziumdioxid wenigstens 1,5 der organischen verbrückenden Gruppen pro 10 Siliziumatomen aufweist.

3. Membran nach Anspruch 1 oder 2, wobei die organischen verbrückenden Gruppen ausgewählt sind aus divalenten, trivalenten und tetravalenten Kohlenwasserstoffgruppen mit 1-12 Kohlenstoffatomen, und wobei sie vorzugsweise eine Ethylengruppe oder Methylengruppe aufweisen.

4. Membran nach einem der Ansprüche 1-3, wobei das Siliziumdioxid weiter organische monovalente Endgruppen aufweist, die an ein Siliziumatom gebunden sind.

5. Membran nach einem der Ansprüche 1-4, wobei der organische Polymerträger ausgewählt ist aus Polyamidimiden, Polyimiden und Polyetheretherketonen.

6. Membran nach einem der Ansprüche 1-5, wobei der Siliziumdioxidfilm eine Dicke von 20 nm bis 1 µm hat, insbesondere zwischen 50 und 500 nm.

7. Membran nach einem der Ansprüche 1-6, wobei der hybride Siliziumdioxidfilm porös ist mit einem durchschnittlichen Porendurchmesser zwischen 0,2 und 2 nm, insbesondere zwischen 0,3 und 1,2 nm.

8. Verfahren zum Herstellen einer Membran, die einen organisch-anorganischen hybriden Siliziumdioxidfilm auf einem organischen Polymerträger aufweist, der ausgewählt ist aus Polyacrylnitril, Polysulfonen, Polyethersulfonen, Polyetherketonen, Polyimiden, Polyetherimiden, Polyethylenterephthalat, Polyamiden, Polyamidimiden und Celluloseestern, der das Aufbringen eines alkoxylierten oder acylierten Silans aufweist, in dem organische verbrückende Gruppen an zwei oder mehr Siliziumatome gebunden sind, auf den organischen Polymerträger, gefolgt von Erhitzen des organischen Polymerträgers auf eine Temperatur zwischen 50 und 300°C in einer nicht oxidierenden Atmosphäre.

9. Verfahren nach Anspruch 8, wobei das alkoxylierte oder acylierte Silan die Formel I, II, III, IV oder V hat:

$$(R'O)_3Si\text{-}[R]\text{-}Si(OR')_3, \qquad (I)$$

$$((R'O)_3Si)_2\text{=}[R]\text{-}Si(OR')_3, \qquad (II)$$

$$((R'O)_3Si)_2\text{=}[R]\text{=}(Si(OR')_3)_2, \qquad (III)$$

$$(R'O)_3Si\text{-}[R]\text{-}Si(OR')_2\text{-}[R]\text{-}Si(OR')_3 \qquad (IV)$$

$$(R'O)_2R°Si\text{-}[R]\text{-}SiR°(OR')_2, \qquad (V)$$

wobei R eine organische Gruppe mit 1-12 Kohlenstoffatomen ist; R' = $C_1$-$C_6$-Alkyl oder-Alkanoyl ist, insbesondere $C_1$-$C_4$-Alkyl, und R°=$C_1$-$C_2$-Alkyl oder Wasserstoff ist.

10. Verfahren nach Anspruch 8 oder 9, wobei das alkoxylierte oder acylierte Silan auf den organischen Polymerträger durch chemische Gasphasenabscheidung bzw. CVD (CVD = chemical vapour deposition) aufgebracht wird, vorzugsweise durch plasmagestützte CVD.

11. Verfahren nach Anspruch 10, wobei ein oder mehrere, und vorzugsweise alle der folgenden Parameter angewandt werden:

    o $Ar^+$,$e^-$ Flussrate: 15-120 Standardkubikzentimeter pro Minute (sccm), vorzugsweise 25-50 sccm;
    o Silan-Precursor-Ar-Flussratenverhältnis: 2,5-25 bezüglich des Volumens, vorzugsweise 3-5;
    o zeitlich aufgelöstes Pulsieren des Silan-Precursors, ausgedrückt in Zeit-An/Zeit-Aus: 0,002-0,015, vorzugsweise 0,0025-0,01;
    o Substrattemperatur: 25-200°C, vorzugsweise 50-150°C;
    o Druck: 0,1-1 mbar, vorzugsweise 0,15-0,25 mbar;
    o Vorspannung: 2-50 eV, vorzugsweise 5-15 eV.

12. Verfahren nach Anspruch 8 oder 9, wobei das alkoxylierte Silan auf den organischen Polymerträger aufgebracht wird durch Hydrolysieren des alkoxylierten Silans in einem Lösungsmittel und Ablagern des hydrolysierten Silans auf dem organischen Polymerträger, vorzugsweise durch Siebdruck, Tintenstrahldruck oder Tauchbeschichtung.

13. Verfahren nach einem der Ansprüche 8-12, wobei der organische Polymerträger vorbehandelt wird durch ein oder mehrere von Folgendem: eine anorganische Säurebehandlung, eine Plasmabehandlung, Infrarotbestrahlung und eine Behandlung mit einer reaktiven Siliziumverbindung, wobei die reaktive Siliziumverbindung die Formel $(R'O)_{3-x}R_xSi\text{-}R''$ hat, wobei R = $C_1$-$C_4$-Alkyl, R' = $C_1$-$C_6$-Alkyl, insbesondere $C_1$-$C_4$-Alkyl, R'' eine reaktive Gruppe ist, die ausgewählt ist aus einer Aminogruppe, Hydroxylgruppe und Vinylgruppe, die optional über eine Alkylen- und/oder Estergruppe gebunden ist, und x= 0 oder 1.

14. Verfahren nach einem der Ansprüche 8-13, wobei das Erhitzen des organischen Polymerträgers auf eine Temperatur zwischen 100 und 200°C durchgeführt wird.

15. Verwendung einer Membran nach einem der Ansprüche 1-7 oder hergestellt durch das Verfahren nach einem der Ansprüche 8-14 in Trennungsprozessen, insbesondere bei der Trennung von:

    a. kleinen Molekülen voneinander, insbesondere Wasserstoff von anderen Gasen;
    b. Wasser von kleinen organischen Molekülen wie Alkoholen;
    c. kleinen organischen Molekülen wie Alkoholen von Wasser mit einer Phasenveränderung von flüssig zu dampfförmig über die Membran;
    d. Wasser von gelösten Stoffen, wie Salzen oder organischen Resten; oder
    e. Wasser oder organischen Lösungsmitteln von größeren Molekülen oder Partikeln durch einen Nanofiltrationsprozess.

**Revendications**

1. Membrane comprenant un film de silice organique-inorganique hybride sur un support polymère organique, choisi parmi les polyacrylonitriles, les polysulfones, les polyéther-sulfones, les polyéther-cétones, les polyimides, les polyéther-imides, les polyéthylène-téréphthalates, les polyamides, les polyamide-imides et les esters de cellulose, membrane dans laquelle la silice comprend des groupes organiques de pontage liés à deux ou plusieurs atomes de silicium, et où la silice comprend au moins 1 desdits groupes organiques de pontage pour 10 atomes de silicium.

2. Membrane selon la revendication 1, dans laquelle la silice comprend au moins 1,5 desdits groupes organiques de pontage pour 10 atomes de silicium.

3. Membrane selon l'une des revendications 1 ou 2, dans laquelle lesdits groupes organiques de pontage sont choisis parmi les groupes hydrocarbonés divalents, trivalents et tétravalents ayant 1-12 atomes de carbone, et de préférence comprennent un groupe éthylène ou un groupe méthylène.

4. Membrane selon l'une quelconque des revendications 1 à 3, dans laquelle la silice comprend en outre des groupes de terminaison monovalents organiques liés à un atome de silicium.

5. Membrane selon l'une quelconque des revendications 1 à 4, dans laquelle le support polymère organique est choisi parmi les polyamides-imides, les polyimides, et les polyéther-éthercétones.

6. Membrane selon l'une quelconque des revendications 1 à 5, dans laquelle le film de silice a une épaisseur de 20 nm à 1 $\mu$m, en particulier entre 50 et 500 nm.

7. Membrane selon l'une quelconque des revendications 1 à 6, dans laquelle le film de silice hybride est poreux et présente un diamètre moyen des pores compris entre 0,2 et 2 nm, en particulier entre 0,3 et 1,2 nm.

8. Procédé de production d'une membrane comprenant un film de silice organique-inorganique hybride sur un support polymère organique, choisi parmi les polyacrylonitriles, les polysulfones, les polyéther-sulfones, les polyéther-cétones, les polyimides, les polyéther-imides, les polyéthylène-téréphthalates, les polyamides, les polyamide-imides et les esters de cellulose, comprenant l'application d'un silane alcoxylé ou acylé, dans lequel les groupes organiques de pontage sont liés à deux ou plusieurs atomes de silicium, sur le support polymère organique, suivie par le chauffage du support polymère organique à une température comprise entre 50 et 300°C dans une atmosphère non-oxydante.

9. Procédé selon la revendication 8, dans lequel ledit silane alcoxylé ou acylé répond aux formules I, II, III, IV ou V:

$$(R'O)_3Si-[R]-Si(OR')_3, \qquad (I)$$

$$((R'O)sSi)_2=[R]-Si(OR')s, \qquad (II)$$

$$((R'O)_3Si)_2=[R]=(Si(OR')_3)_2, \qquad (III)$$

$$(R'O)_3Si-[R]-Si(OR')_2-[R]-Si(OR')_3 \qquad (IV)$$

$$(R'O)_2R°Si-[R]-SiR°(OR')_2, \qquad (V)$$

dans lesquelles
R est un groupe organique ayant 1-12 atomes de carbone,
R' est un groupe $(C_1-C_6)$-alkyle ou alcanoyle et, en particulier un groupe $(C_1-C_4)$-alkyle, et
R° est un atome d'hydrogène ou un groupe $(C_1-C_2)$-alkyle.

10. Procédé selon la revendication 8 ou 9, dans lequel le silane alcoxylé ou acylé est appliqué sur le support polymère organique par dépôt chimique en phase vapeur (CVD), de préférence par CVD activé par plasma.

11. Procédé selon la revendication 10, dans lequel un ou plusieurs, de préférence tous les paramètres suivants sont appliqués:

débit (Ar+, e-): 15-120 centimètre cube standard par minute (ccsm), de préférence 25-50 ccsm;
rapport précurseur silane sur débit d'Ar : 2,5 à 25 en volume, de préférence 3-5;
pulsation à résolution temporelle du précurseur silane exprimé en temps activé/temps désactivé): 0,002-0,015, de préférence de 0,0025 à 0,01;
température du substrat: 25 à 200°C, de préférence de 50 à 150°C;
pression: 0,1-1 mbar, de préférence 0,15-0,25 mbar;
polarisation: 2-50 eV, de préférence 5-15 eV.

12. Procédé selon la revendication 8 ou 9, dans lequel le silane alcoxylé est appliqué sur le support polymère organique par hydrolyse dudit silane alcoxylé dans un solvant et dépôt du silane hydrolysé sur le support polymère organique, de préférence par sérigraphie, impression à jet d'encre ou revêtement par immersion.

13. Procédé selon l'une quelconque des revendications 8-12, dans lequel le support polymère organique est prétraité par un ou plusieurs traitements par un acide inorganique, traitement plasma, irradiation par infrarouge et traitement par un composé de silicium réactif, procédé dans lequel le composé de silicium réactif présente la formule $(R'O)_{3-x}R_x$-Si-R",
formule dans laquelle

- R est un groupe $(C_1$-$C_4)$-alkyle,
- R' est un groupe $(C_1$-$C_6)$-alkyle, en particulier un groupe $(C_1$-$C_4)$-alkyle,
- R" est un groupe réactif choisi parmi les groupes amino, hydroxyle et vinyle éventuellement lié via un groupe alkylène et/ou un groupe ester, et
- x = 0 ou 1.

14. Procédé selon l'une quelconque des revendications 8-13, dans lequel ledit chauffage du support polymère organique est effectué à une température comprise entre 100 et 200°C.

15. Utilisation d'une membrane selon l'une quelconque des revendications 1-7 ou produite par le procédé selon l'une quelconque des revendications 8-14 dans des procédés de séparation, en particulier dans la séparation:

a. de petites molécules les unes des autres, en particulier l'hydrogène des autres gaz;
b. de l'eau des petites molécules organiques, tels que des alcools;
c. de petites molécules organiques tels que des alcools de l'eau avec un changement de phase de l'état liquide à l'état vapeur sur la membrane;
d. de l'eau des solutés, tels que des sels ou des résidus organiques; ou
e. de l'eau ou de solvants organiques des molécules ou des particules plus grosses par un procédé de nano-filtration.

Figure 1a

Figure 1b

Figure 2a

Figure 2b

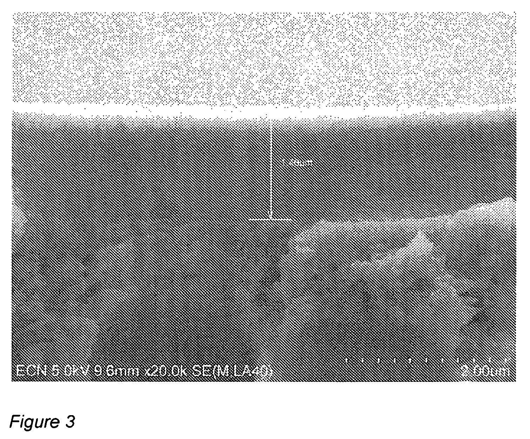

*Figure 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007081212 A, Sah
- WO 2010008283 A, Kreiter
- WO 2007139379 A
- WO 2005062337 A
- WO 2004030019 A

**Non-patent literature cited in the description**

- **CASTRICUM et al.** *J. Membr. Sci,* 2008
- Nanofiltration - Principles and Applications. Elsevier, 2006
- **KREITER et al.** *ChemSusChem,* 2009, vol. 2, 158-160
- **CASTRICUM et al.** *Chem. Commun,* 2008, 1103-1105
- *J. Mater. Chem.,* 2008, vol. 18, 1-10
- **CAMPANIELLO et al.** *Chem. Commun.,* 2004, 834-835
- **CASTRICUM et al.** *J. Membrane Science,* 2008, vol. 324, 111-118
- **KREITER et al.** *ChemSusChem.,* 2009, vol. 2, 158-160
- **LO et al.** *J. Membrane Science,* 2010, vol. 365, 418-425
- **CREATORE et al.** *Thin Solid Films,* 2008, vol. 516, 8547-8553
- **CREATORE et al.** *Plasma Sources Sci. Technol.,* 2006, vol. 15, 421431
- **CREATORE et al.** *Thin Solid Films,* 2004, vol. 449, 52-62
- **BARRELL et al.** *Surface Coatings Technol.,* 2004, vol. 180-181, 367-371